# EUROPEAN PATENT SPECIFICATION

(11) **EP 4 752 845 B1**
(45) Date of publication and mention of the grant of the patent: **07.10.2026**
(21) Application number: 24863825.6
(22) Date of filing: 30.09.2024
(51) Int. Cl.: G06T 19/20, G06T 15/20, G05D 1/229, G05D 1/243, G05D 1/689, G06T 17/00, G06T 7/55, G06T 7/73, G06T 15/10, G06T 17/10, G06T 17/20, G06T 19/00

(54) **IMAGE ANALYSIS APPARATUS, IMAGE ANALYSIS METHOD, AND COMPUTER PROGRAM**
BILDANALYSEVORRICHTUNG, BILDANALYSEVERFAHREN UND COMPUTERPROGRAMM
DISPOSITIF D'ANALYSE D'IMAGE, PROCÉDÉ D'ANALYSE D'IMAGE, ET PROGRAMME INFORMATIQU

(43) Date of publication of application: 03.06.2026
(73) Proprietor: CalTa Inc., Minato-ku Tokyo 108-0074 (JP)
(72) Inventor: TAKAMIZAWA, Takuya, Tokyo 108-0074 (JP)
(74) Representative: Hasegawa, Kan
(86) International application number: PCT/JP2024/034914
(87) International publication number: WO 2026/069648

(56) References cited:
- EP-A1- 3 355 279
- WO-A1-2018/138290
- JP-A- 2007 034 808
- JP-A- 2018 181 056
- US-A1- 2007 025 595
- US-A1- 2021 018 447
- US-A1- 2021 358 102
- US-A1- 2022 130 145

## Description

### [TECHNICAL FIELD]

The present disclosure relates to an image analysis apparatus, an image analysis method, and a computer program.

### [BACKGROUND ART]

The difference detection apparatus described in JP 2018 - 181 056 A acquires a plurality of images by imaging a structure from a plurality of directions during a first inspection, and generates first point cloud data of three dimensions from the plurality of images. Then, during a second inspection, the difference detection apparatus again acquires a plurality of images by imaging the structure from a plurality of directions and generates second point cloud data of three dimensions from the plurality of images. The first point cloud data and the second point cloud data represent the same region of the structure.

The difference detection apparatus compares color information representing color of points included in the first point cloud data with color information representing color of points included in the second point cloud data. Then, for a region where a difference between the two becomes equal to or greater than a threshold value, the difference detection apparatus changes color of the region where the difference becomes equal to or greater than the threshold value in the second point cloud data to display.

EP 3 355 279 A1 describes a method for identifying differences between 3-dimensional scenes. The method renders metrics about objects in the scenes to be compared into screen-space and computes a pixel-by-pixel difference between the scenes. The metrics can include color, depth, or texture coordinates. Once the difference is computed, visualization techniques that highlight the changes to the user can be used.

### [SUMMARY OF INVENTION]

### [Technical Problem]

However, the difference detection apparatus described in JP 2018 - 181 056 A analyzes the entire region of three-dimensional data (the first point cloud data and the second point cloud data) to calculate the differences. Therefore, processing load of the difference detection apparatus is excessive.

Therefore, the present disclosure has been made in view of the foregoing and has its object of providing an image analysis apparatus, an image analysis method, and a computer program that make it possible to reduce processing load when calculating a difference.

### [Solution to Problem]

The present invention relates to an image analysis apparatus according to claim 1, an image analysis method according to claim 7, and a computer program according to claim 8. Claims 2 to 6 refer to specifically advantageous realizations of the image analysis apparatus according to claim 1.

According to an aspect of the present disclosure, there is provided an image analysis apparatus comprising: an image generation unit that generates a first two-dimensional image and a second two-dimensional image; and a difference calculation unit that calculates a difference between the first two-dimensional image and the second two-dimensional image; wherein the image generation unit generates the first two-dimensional image representing a first three-dimensional model as a two-dimensional plane viewed from a first viewpoint in a first virtual space, the first three-dimensional model being generated based on a measurement result of a shape of a target object at a first time in a real space, and generates the second two-dimensional image representing a second three-dimensional model as a two-dimensional plane viewed from a second viewpoint in a second virtual space, the second three-dimensional model being generated based on a measurement result of a shape of the target object at a second time in the real space, a same coordinate system is set in the first virtual space and the second virtual space, and in the coordinate system, a position and a viewing direction of the second viewpoint are a same as a position and a viewing direction of the first viewpoint, respectively.

Also, according to an aspect of the present disclosure, there is provided an image analysis method comprising: generating a first two-dimensional image representing a first three-dimensional model as a two-dimensional plane viewed from a first viewpoint in a first virtual space, the first three-dimensional model being generated based on a measurement result of a shape of a target object at a first time in a real space; generating a second two-dimensional image representing a second three-dimensional model as a two-dimensional plane viewed from a second viewpoint in a second virtual space, the second three-dimensional model being generated based on a measurement result of a shape of the target object at a second time in the real space; and calculating a difference between the first two-dimensional image and the second two-dimensional image, wherein a same coordinate system is set in the first virtual space and the second virtual space, and in the coordinate system, a position and a viewing direction of the second viewpoint are a same as a position and a viewing direction of the first viewpoint, respectively.

Furthermore, according to an aspect of the present disclosure, there is provided a computer program causing a computer to perform: generating a first two-dimensional image representing a first three-dimensional model as a two-dimensional plane viewed from a first viewpoint in a first virtual space, the first three-dimensional model being generated based on a measurement result of a shape of a target object at a first time in a real space; generating a second two-dimensional image representing a second three-dimensional model as a two-dimensional plane viewed from a second viewpoint in a second virtual space, the second three-dimensional model being generated based on a measurement result of a shape of the target object at a second time in the real space; and calculating a difference between the first two-dimensional image and the second two-dimensional image, wherein a same three-dimensional coordinate system is set in the first virtual space and the second virtual space, and in the three-dimensional coordinate system, a position and a viewing direction of the second viewpoint are a same as a position and a viewing direction of the first viewpoint, respectively.

### [Advantageous Effects of Invention]

According to the present disclosure, it is possible to provide an image analysis apparatus, an image analysis method, and a computer program that make it possible to reduce processing load when calculating a difference.

### [BRIEF DESCRIPTION OF DRAWINGS]

[FIG. 1]

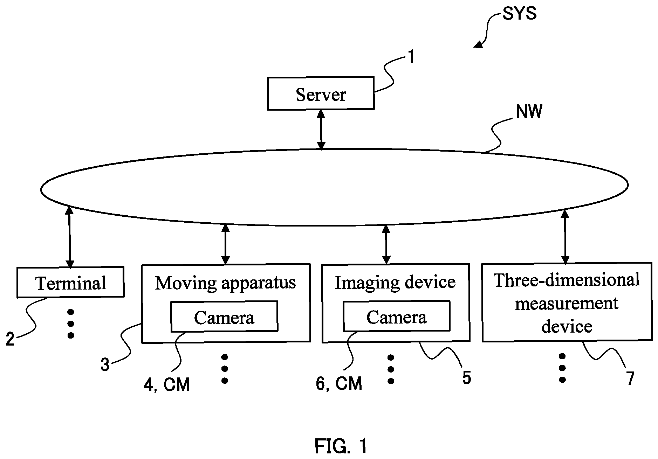

   FIG. 1 is a block diagram showing an example configuration of an image analysis system according to an embodiment of the present invention.
[FIG. 2]

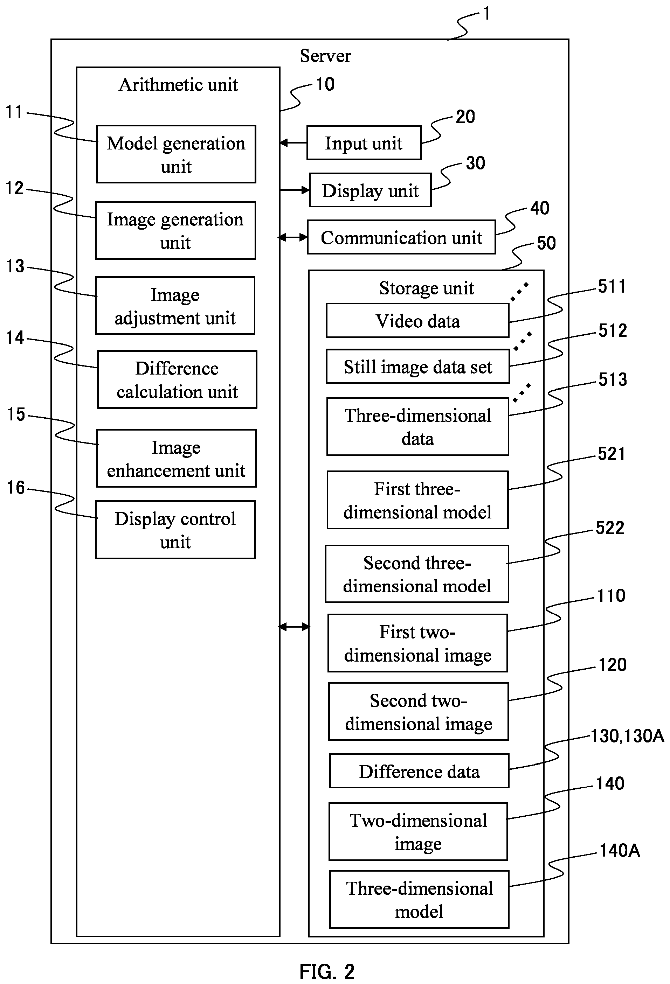

   FIG. 2 is a block diagram showing an example configuration of a server according to the embodiment.
[FIG. 3]

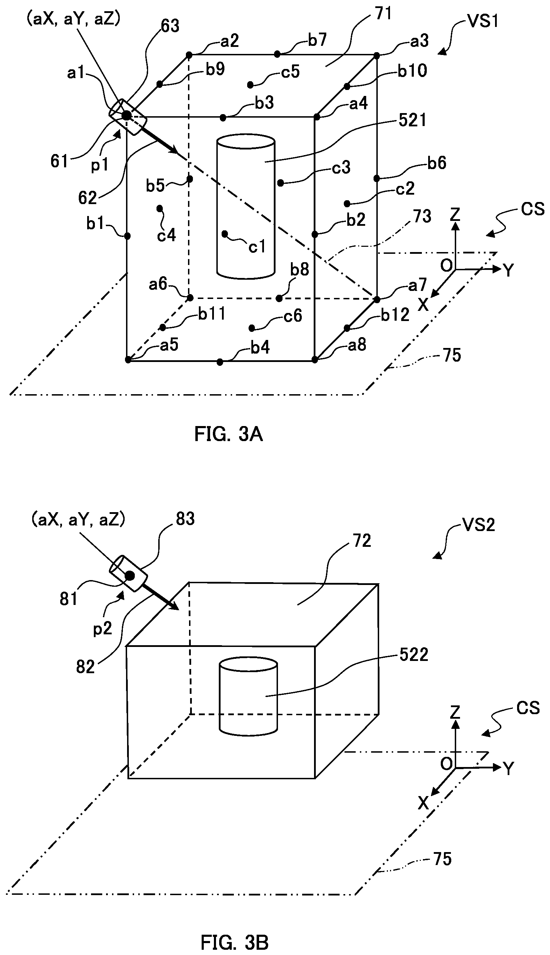

   FIG. 3A is a perspective view schematically showing a first viewpoint, a first three-dimensional model, and a first rectangular parallelepiped in a first virtual space according to the embodiment. FIG. 3B is a perspective view schematically showing a second viewpoint, a second three-dimensional model, and a second rectangular parallelepiped in a second virtual space according to the embodiment.
[FIG. 4]

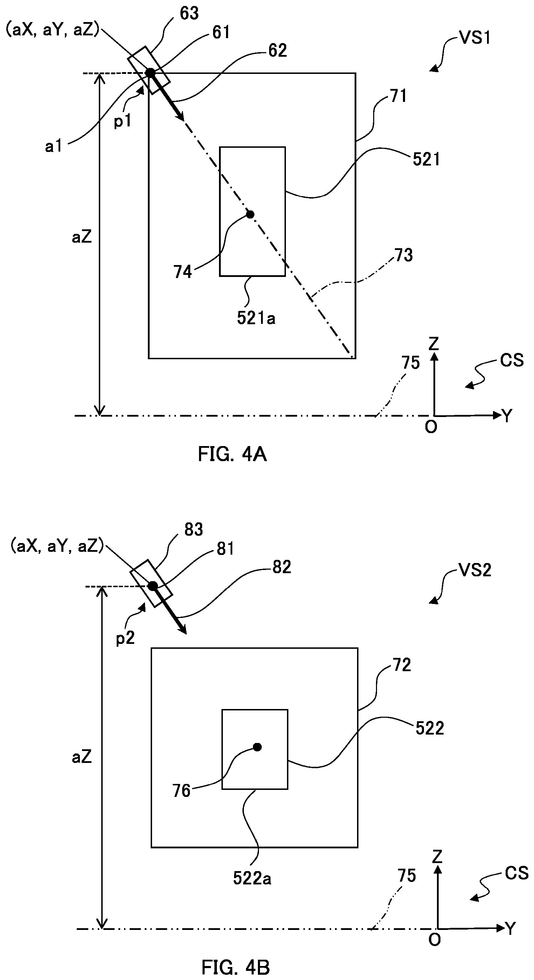

   FIG. 4A is a side view schematically showing a first viewpoint, a first three-dimensional model, and a first rectangular parallelepiped in a first virtual space according to the embodiment. FIG. 4B is a side view schematically showing a second viewpoint, a second three-dimensional model, and a second rectangular parallelepiped in a second virtual space according to the embodiment.
[FIG. 5]

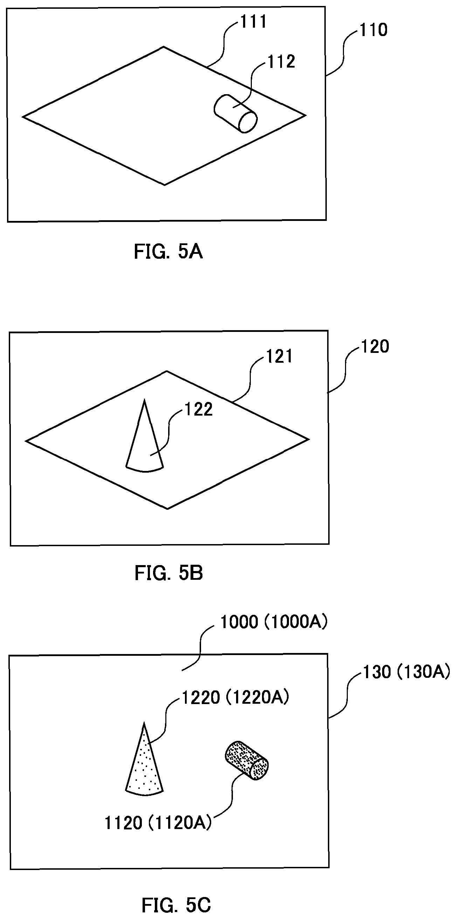

   FIG. 5A is a diagram showing an example of a first two-dimensional image according to the embodiment. FIG. 5B is a diagram showing an example of a second two-dimensional image according to the embodiment. FIG. 5C is a diagram showing a concept of difference data according to the embodiment.
[FIG. 6]

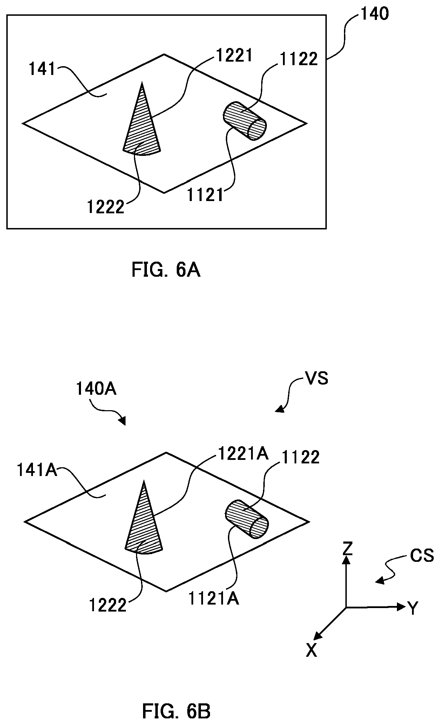

   FIG. 6A is a diagram showing an example of a two-dimensional image including regions where a first two-dimensional image differs from a second two-dimensional image according to the embodiment. FIG. 6B is a diagram showing an example of a three-dimensional model including regions where a first two-dimensional image differs from a second two-dimensional image according to the embodiment.
[FIG. 7]

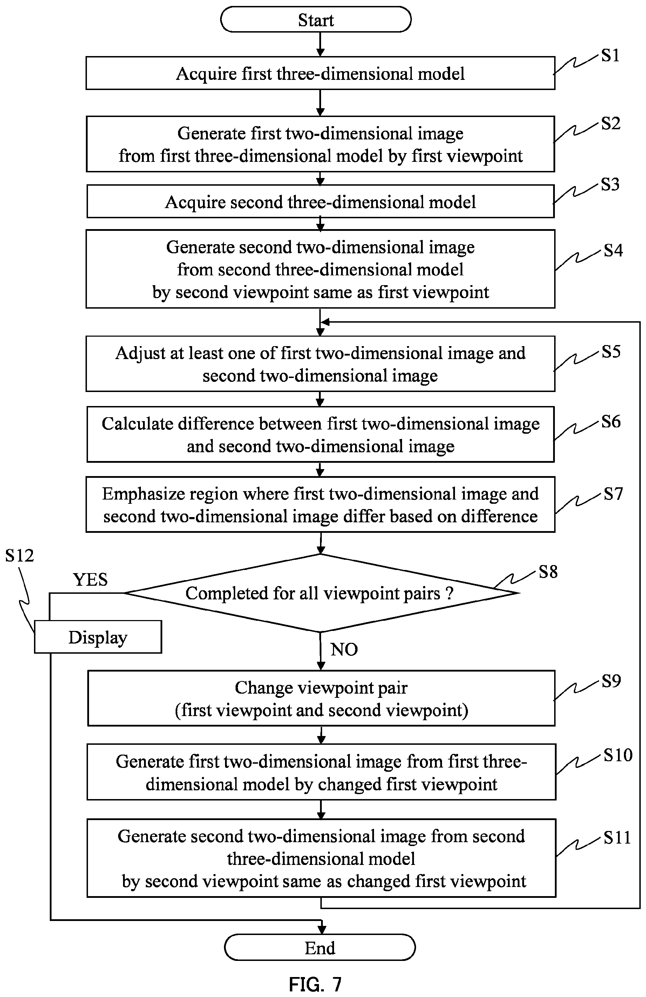

   FIG. 7 is a flowchart showing a image analysis method according to the embodiment.

### [DESCRIPTION OF EMBODIMENTS]

The following is a detailed description of a preferred embodiment of the present disclosure with reference to the accompanying drawings. In this specification and the drawings, duplicated explanations will be omitted by applying the same reference numerals to configuration elements that have substantially the same functional configuration. In the embodiment, a rectangular parallelepiped includes a cube.

FIG. 1 shows an example configuration of an image analysis system SYS according to an embodiment of the present invention. As shown in FIG. 1, the image analysis system SYS includes a server 1. The server 1 corresponds to an example of an "image analysis apparatus" of the present disclosure.

Server 1 calculates a difference between two two-dimensional images representing two three-dimensional models as two-dimensional planes viewed from the same viewpoint in order to detect a different portion between the two three-dimensional models generated by measuring the same target object at different times. Thus, according to the embodiment, since the difference of the two-dimensional images is calculated, processing load on the server 1 when calculating the difference can be reduced compared to a case where a difference is calculated by analyzing the entire regions of three-dimensional data constituting three-dimensional models. Details of this point are described below.

The image analysis system SYS also includes at least one terminal 2, at least one moving apparatus 3, at least one imaging device 5, or at least one three-dimensional measurement device 7.

The server 1, the terminal 2, the moving apparatus 3, the imaging device 5 and the three-dimensional measurement device 7 are connected to a network NW. The network NW includes, for example, the Internet, a closed network, a public telephone network, a LAN (Local Area Network), and a short-range wireless network.

The terminal 2 is, for example, a personal computer (e.g., a notebook PC, a desktop PC, or a tablet).

The moving apparatus 3 is, for example, an unmanned moving apparatus or a manned moving apparatus. The unmanned moving apparatus is, for example, an unmanned aerial vehicle such as a drone, an unmanned ground machine, an unmanned underwater vehicle, or an unmanned surface vehicle. The unmanned ground machine is, for example, an unmanned ground vehicle or an unmanned ground machine modeled after a living organism (e.g., a snake-type unmanned ground machine). The manned moving apparatus is, for example, an aircraft, an automobile, a ship, or a submarine. The moving apparatus 3 includes a camera 4.

The imaging device 5 includes a camera 6. The imaging device 5 is, for example, a portable terminal such as a smartphone. The imaging device 5 may be, for example, the camera 6 itself.

The cameras 4 and 6 image a target object and generate video data that represents a moving image including an image of the target object. The moving image is a sequence of consecutive two-dimensional images. The cameras 4 and 6 may also generate a plurality of still image data items each representing a still image including an image of the target object. A still image is a two-dimensional image.

The video data is hereinafter referred to as "video data 511" (FIG. 2). The still image data items are referred to as "still image data set 512" (FIG. 2).

Hereinafter, when it is not necessary to distinguish between the cameras 4 and 6, the cameras 4 and 6 are collectively referred to as "camera CM."

The three-dimensional measurement device 7 measures a shape of the target object and generates three-dimensional data representing the shape of the target object (hereinafter referred to as "three-dimensional data 513"). The three-dimensional data 513 is typically point cloud data. A three-dimensional model of the target object is formed by the three-dimensional data 513. The three-dimensional measurement device 7 may be contact type or non-contact type. Also, the three-dimensional measurement device 7 may employ an active method or a passive method. The active method is, for example, optical radar method (Time of Flight (ToF) method), active stereo method, or optical interference method. The optical radar method measures a shape of the target object by irradiating the target object with light and measuring a time or phase change until the reflected light returns to a detector. The optical radar method is, for example, LiDAR (Light Detection And Ranging). The active stereo method measures a shape of the target object by projecting a laser beam, slit light, or a light code pattern. The optical interference method measures a shape of the target object by irradiating the target object with light and using interference of the light. The passive method is, for example, lens focus method.

The target object to be imaged by the camera CM and the target object to be measured by the three-dimensional measurement device 7 are not particularly limited as long as it can be imaged by the camera CM or it can be measured by the three-dimensional measurement device 7. For example, a size, a shape, a pattern, and a color of the target object are not particularly limited. For example, the target object is one or more movable or immovable properties. The target object is, for example, one or more objects. Typically, the target object is one or more stationary objects. The stationary object is, for example, an artificial object or a natural object. The artificial object is, for example, a structure, a machine, an electronic device, or a work of authorship. The structure is, for example, a building or an infrastructure facility. The building is, for example, a high-rise building or a residential house. The infrastructure facility is a facility for building social infrastructure. For example, the infrastructure facility is a road, a bridge, a road traffic facility, a power generation facility, a power distribution facility, a water treatment facility, or a gas distribution facility. The machine is, for example, an automobile, a work vehicle, a train, an aircraft, a ship, a submarine, or a robot. The natural object is, for example, a tree, a forest, a ground surface, a cliff, a coast, or a river.

The terminal 2 acquires the video data 511 or the still image data set 512 generated by the camera CM, or the three-dimensional data 513 generated by the three-dimensional measurement device 7. For example, the terminal 2 receives, via the network NW, the video data 511 or the still image data set 512 transmitted from the camera CM, or the three-dimensional data 513 transmitted from the three-dimensional measurement device 7. The terminal 2 transmits the video data 511, the still image data set 512, and the three-dimensional data 513 to the server 1 via the network NW. Incidentally, the moving apparatus 3 and the imaging device 5 may also transmit the video data 511 or the still image data set 512 to the server 1 via the network NW. Also, the three-dimensional measurement device 7 may transmit the three-dimensional data 513 to the server 1 via the network NW.

FIG. 2 is a block diagram showing an example configuration of the server 1 in FIG. 1. As shown in FIG. 2, the server 1 includes an arithmetic unit 10, a communication unit 40, and a storage unit 50. The server 1 may also include an input unit 20 and a display unit 30.

The input unit 20 is an input device for inputting various types of information to the arithmetic unit 10. For example, the input unit 20 is a keyboard and a pointing device, or a touch panel.

The display unit 30 displays various types of information. The display unit 30 is, for example, a liquid crystal display or an organic electroluminescent display.

The communication unit 40 is connected to the network NW. The communication unit 40 communicates with external devices connected to the network NW. The external devices are, for example, the terminal 2, the moving apparatus 3, the imaging device 5, and the three-dimensional measurement device 7. The communication unit 40 is a communication device that communicates according to a predetermined communication protocol, and includes, for example, a network interface controller. The predetermined communication protocol is, for example, a protocol compliant with Ethernet (registered trademark) and the Internet Protocol Suite.

The communication unit 40 receives the video data 511 or the still image data set 512 from the terminal 2, the moving apparatus 3, and the imaging device 5 via the network NW. Also, the communication unit 40 receives the three-dimensional data 513 from the terminal 2 and the three-dimensional measurement device 7 via the network NW.

The storage unit 50 includes a storage device, and stores data and computer programs. The storage unit 50 includes a main storage device such as a semiconductor memory or the like, and an auxiliary storage device such as a semiconductor memory, a hard disk drive, or the like. The storage unit 50 may also include removable media such as an optical disk. The storage unit 50 may be, for example, a non-transitory computer readable storage medium.

The storage unit 50 stores the video data 511, the still image data sets 512, and the three-dimensional data 513. The video data 511, the still image data sets 512, and the three-dimensional data 513 are associated with attribute information (hereinafter referred to as "attribute information AT"). The attribute information AT includes, for example, user information, data acquisition conditions, and target object information. The user information includes, for example, identification information of a user of the terminal 2, the moving apparatus 3, the imaging device 5, or the three-dimensional measurement device 7. The data acquisition conditions include, for example, imaging time or measurement time. The imaging time and the measurement time are indicated by one or more of year, month, day, and time. The data acquisition conditions may include information about an imaging location or a measurement location. The imaging location and the measurement location are indicated, for example, by position coordinates of the camera CM and the three-dimensional measurement device 7 obtained by GPS (Global Positioning System) or GNSS (Global Navigation Satellite System), respectively. The target object information includes, for example, identification information of the target object. The target object information may include coordinates of a ground control point (GCP: Ground control point).

The storage unit 50 also stores a first three-dimensional model 521, a second three-dimensional model 522, a first two-dimensional image 110, a second two-dimensional image 120, difference data 130 (130A), a two-dimensional image 140, and a three-dimensional model 140A. These data items are stored when generated. Details of these data items are described below.

The arithmetic unit 10 performs various calculations. The arithmetic unit 10 includes a processor such as a CPU (Central Processing Unit), a GPU (Graphics Processing Unit), or the like.

Specifically, the arithmetic unit 10 includes an image generation unit 12 and a difference calculation unit 14. The arithmetic unit 10 may also include a model generation unit 11, an image adjustment unit 13, an image enhancement unit 15, and a display control unit 16. For example, the arithmetic unit 10 functions as the model generation unit 11, the image generation unit 12, the image adjustment unit 13, the difference calculation unit 14, the image enhancement unit 15, and the display control unit 16 by executing a computer program stored in the storage unit 50.

The model generation unit 11 acquires, from the video data 511 or the still image data set 512 in the storage unit 50, a plurality of two-dimensional images generated by imaging the target object from a plurality of different imaging positions. Then, the model generation unit 11 generates a three-dimensional model of the target object based on the plurality of two-dimensional images. The three-dimensional model is placed in a virtual space. The three-dimensional model represents a three-dimensional shape of the target object. The three-dimensional model is formed by point cloud data. The point cloud data is data representing a point cloud. The point cloud is an aggregation of multiple points. The point cloud data includes three-dimensional coordinates of each point. The point cloud data may further include one or more information of color information (e.g., RGB values) of each point, normal vector information of each point, and reflection intensity information.

As an example, the model generation unit 11 generates a three-dimensional model by performing SfM (Structure from Motion) processing. SfM processing refers to a process that generates a three-dimensional model by utilizing the principle of triangulation based on a plurality of two-dimensional images generated by imaging a target object having a plurality of feature points from a plurality of imaging positions. SfM processing preferably includes bundle adjustment. The bundle adjustment refers to a process of minimizing reprojection error. Also, the model generation unit 11 may perform MVS (Multi View Stereo) processing in addition to SfM processing. MVS processing refers to a process that calculates depth and normal for each pixel of each two-dimensional image by multi-view stereo measurement, integrates them, and generates a dense point cloud of the target object.

It is also preferable for the model generation unit 11 to assign a surface to a three-dimensional model based on point cloud data. The process of assigning the surface is, for example, a process of converting the point cloud data constituting the three-dimensional model into mesh data. In this case, for example, the model generation unit 11 generates a plurality of polygonal (e.g., triangular) facets (e.g., polygons) formed by connecting points of the point cloud data, and represents the three-dimensional model by the plurality of polygonal facets. In this case, for example, the model generation unit 11 generates TIN (Triangulated Irregular Network) data based on the point cloud data, and represents the three-dimensional model by the TIN data. As a result, the three-dimensional model is represented by an aggregation of triangular facets. Incidentally, the process of assigning the surface may be, for example, a process of converting point cloud data into surface data.

Furthermore, the model generation unit 11 may add material information to the surface assigned to the three-dimensional model based on the two-dimensional images. The material information is information including a color and a pattern of the target object. For example, the model generation unit 11 may perform a process of mapping a texture to each facet (e.g., each polygon) constituting the mesh data of the three-dimensional model.

As explained above with reference to FIG. 2, the three-dimensional model is generated based on the result of imaging of the target object by the camera CM. Therefore, the imaging of the target object by the camera CM may be regarded as a measurement of the shape of the target object. Therefore, a time when the target object is imaged by the camera CM is a time when the target object is measured by the camera CM.

Incidentally, the three-dimensional data 513 generated by the three-dimensional measurement device 7 is similar to the point cloud data constituting the three-dimensional model generated by the model generation unit 11. Similarly, a surface may be assigned to the three-dimensional model represented by the three-dimensional data 513, and material information may be added to the surface.

The storage unit 50 stores the three-dimensional model generated by the model generation unit 11 as the first three-dimensional model 521. Also, the storage unit 50 stores another three-dimensional model generated by the model generation unit 11 as the second three-dimensional model 522. Also, the three-dimensional data 513 generated by the three-dimensional measurement device 7 may be treated as the first three-dimensional model 521, and another three-dimensional data 513 may be treated as the second three-dimensional model 522.

### Details of these are described below.

Incidentally, the method performed by the three-dimensional measurement device 7 and SfM processing are exemplified as methods for generating the three-dimensional data 513, the first three-dimensional model 521, and the second three-dimensional model 522. However, as long as three-dimensional data or a three-dimensional model can be generated, these generation methods are not particularly limited. For example, three-dimensional data or a three-dimensional model may be generated by 3D Gaussian Splatting or NeRF (Neural Radiance Field). Also, the three-dimensional data or the three-dimensional model is not limited to point cloud data, and data format thereof is not particularly limited.

Next, the image generation unit 12 is described with reference to FIGS. 2 to 4. FIG. 3A is a perspective view schematically showing a first viewpoint 61, a first three-dimensional model 521, and a first rectangular parallelepiped 71 in a first virtual space VS1. FIG. 3B is a perspective view schematically showing a second viewpoint 81, a second three-dimensional model 522, and a second rectangular parallelepiped 72 in a second virtual space VS2. FIG. 4A is a side view schematically showing the first viewpoint 61, the first three-dimensional model 521, and the first rectangular parallelepiped 71 in the first virtual space VS1. FIG. 4A corresponds to FIG. 3A. FIG. 4B is a side view schematically showing the second viewpoint 81, the second three-dimensional model 522, and the second rectangular parallelepiped 72 in the second virtual space VS2. FIG. 4B corresponds to FIG. 3B. Incidentally, a virtual reference plane 75 is rendered in FIGS. 3 and 4 for ease of understanding.

As shown in FIGS. 2 and 3A, the first three-dimensional model 521 is placed in the first virtual space VS1. The first three-dimensional model 521 is a volumetric model generated based on a measurement result of a shape of the target object at a first time (hereinafter referred to as "first time T1") in a real space. The first time T1 is indicated by the attribute information AT. For example, the first time T1 is indicated by one or more of year, month, day, and time.

A three-dimensional coordinate system CS is set in the first virtual space VS1. The three-dimensional coordinate system CS is defined by mutually orthogonal X-axis, Y-axis, and Z-axis. The three-dimensional coordinate system CS may be a coordinate system with an origin O at a predetermined position in the first virtual space VS1, or the three-dimensional coordinate system CS may be a coordinate system to which geospatial coordinates (coordinates on ground) or actual dimension information is assigned. In FIGS. 3 and 4, as an example, for convenience of explanation, the origin O of the three-dimensional coordinate system CS is set on the virtual reference plane 75. The three-dimensional coordinate system CS corresponds to an example of the "coordinate system" in the present disclosure.

The image generation unit 12 generates a first two-dimensional image 110 representing the first three-dimensional model 521 as a two-dimensional plane viewed from a first viewpoint 61 in the first virtual space VS1. The first viewpoint 61 faces in a viewing direction 62 at a position p1 in the first virtual space VS1. In other words, the image generation unit 12 generates the first two-dimensional image 110 by capturing the first three-dimensional model 521 from the first viewpoint 61. Further in other words, the image generation unit 12 generates the first two-dimensional image 110 by pseudo-imaging the first three-dimensional model 521 with a first virtual camera 63 having the first viewpoint 61. The storage unit 50 stores the first two-dimensional image 110.

In detail, the model generation unit 11 sets a first rectangular parallelepiped 71 for the first three-dimensional model 521 in the first virtual space VS1. The first rectangular parallelepiped 71 surrounds the first three-dimensional model 521. The first rectangular parallelepiped 71 has a shape and a size corresponding to a shape and a size of the first three-dimensional model 521. The first rectangular parallelepiped 71 is a rectangular parallelepiped that defines a display range when displaying the first three-dimensional model 521 in a viewer. Hereinafter, a rectangular parallelepiped defining a display range when displaying a three-dimensional model in a viewer may be referred to as a "defining rectangular parallelepiped". The viewer is software or equipment for viewing images. The defining rectangular parallelepiped is, for example, a bounding box. The first rectangular parallelepiped 71 corresponds to an example of the "rectangular parallelepiped" in the present disclosure.

Then, the first viewpoint 61 is set on the first rectangular parallelepiped 71. Therefore, according to the embodiment, the first viewpoint 61 can be set more easily compared to a case where the first viewpoint 61 is determined at an arbitrary point in the first virtual space VS1. In particular, since the first rectangular parallelepiped 71 is necessarily set when displaying the first three-dimensional model 521 in the viewer, it is possible to suppress an occurrence of additional processing solely for determining the first viewpoint 61.

Preferably, the first viewpoint 61 is set at any one of eight vertices a1, a2, a3, a4, a5, a6, a7, a8 of the first rectangular parallelepiped 71, any one of midpoints b1, b2, b3, b4, b5, b6, b7, b8, b9, b10, b11, b12 of twelve edges of the first rectangular parallelepiped 71, or any one of centers c1, c2, c3, c4, c5, c6 of six faces of the first rectangular parallelepiped 71. Therefore, according to this preferred example, the first viewpoint 61 can be set more easily.

For example, in a case where the first viewpoint 61 is set at any one of vertices a1 to a8, the viewing direction 62 of the first viewpoint 61 faces in a direction of a diagonal line of the first rectangular parallelepiped 71. That is, the viewing direction 62 faces a vertex opposing on the diagonal line to the vertex at which the first viewpoint 61 is set.

In the case where the first viewpoint 61 is set at any of the vertices a1 to a8, for example, it is possible to generate the first two-dimensional image 110 when viewing the first three-dimensional model 521 from diagonally above or diagonally below. In particular, since the positions of vertices a1 to a8 are uniquely determined, the process of calculating the positions of vertices a1 to a8 can be omitted.

In the example in FIG. 3A, the position p1 of the first viewpoint 61 is the vertex a1. Specifically, the first viewpoint 61 is set at the vertex a1 of the first rectangular parallelepiped 71 and faces in a direction of a diagonal line 73 extending from the vertex a1. That is, the viewing direction 62 faces from the vertex a1 toward the vertex a7 along the diagonal line 73.

For example, in a case where the first viewpoint 61 is set at any one of midpoints b1 to b12, the viewing direction 62 of the first viewpoint 61 faces a midpoint diagonally opposite across the first three-dimensional model 521 to a midpoint at which the first viewpoint 61 is set. In this case, for example, in a case where the first viewpoint 61 is set at the midpoint b1, the viewing direction 62 faces from the midpoint b1 toward the midpoint b6.

In the case where the first viewpoint 61 is set at any one of midpoints b1 to b12, for example, it is possible to generate the first two-dimensional image 110 when viewing the first three-dimensional model 521 from diagonally above, diagonally below., and diagonally sideways.

For example, in a case where the first viewpoint 61 is set at any one of centers c1 to c6, the viewing direction 62 of the first viewpoint 61 faces a center opposing a center at which the first viewpoint 61 is set, in a direction perpendicular to a face including the center at which the first viewpoint 61 is set. In this case, for example, in a case where the first viewpoint 61 is set at the center c1, the viewing direction 62 faces from the center c1 toward the center c3.

In the case where the first viewpoint 61 is set at any one of centers c1 to c6, for example, it is possible to generate the first two-dimensional image 110 when viewing the first three-dimensional model 521 from a direction perpendicular to a face of the first rectangular parallelepiped 71.

On the other hand, as shown in FIG. 3B, the second three-dimensional model 522 is placed in the second virtual space VS2. The second three-dimensional model 522 is a volumetric model generated based on a measurement result of a shape of the target object at a second time (hereinafter referred to as "second time T2") in the real space. The second time T2 is indicated by the attribute information AT. For example, the second time T2 is indicated by one or more of year, month, day, and time. The second time T2 is different from the first time T1. For example, the second time T2 is a time in the past compared to the first time T1.

The three-dimensional coordinate system CS is set in the second virtual space VS2. That is, the same three-dimensional coordinate system CS is set in the second virtual space VS2 and the first virtual space VS1.

The image generation unit 12 generates a second two-dimensional image 120 representing the second three-dimensional model 522 as a two-dimensional plane viewed from a second viewpoint 81 in the second virtual space VS2. The second viewpoint 81 faces in a viewing direction 82 at a position p2 in the second virtual space VS2. In other words, the image generation unit 12 generates the second two-dimensional image 120 by capturing the second three-dimensional model 522 from the second viewpoint 81. Further in other words, the image generation unit 12 generates the second two-dimensional image 120 by pseudo-imaging the second three-dimensional model 522 with a second virtual camera 83 having the second viewpoint 81. The storage unit 50 stores the second two-dimensional image 120.

In particular, as shown in FIGS. 3A and 3B, in the three-dimensional coordinate system CS, the position p2 and the viewing direction 82 of the second viewpoint 81 (the second virtual camera 83) are the same as the position p1 and the viewing direction 62 of the first viewpoint 61 (the first virtual camera 63), respectively.

Therefore, as shown in FIGS. 4A and 4B, the three-dimensional coordinates (aX, aY, aZ) indicating the position p2 of the second viewpoint 81 are the same as the three-dimensional coordinates (aX, aY, aZ) indicating the position p1 of the first viewpoint 61. Also, the viewing directions 62, 82 (postures of the first virtual camera 63 and the second virtual camera 83) are indicated by the same rotation angles (θx, θy, θz) with respect to a reference direction (a reference posture). θx indicates a rotation angle around the X-axis, θy indicates a rotation angle around the Y-axis, and θz indicates a rotation angle around the Z-axis.

The first three-dimensional model 521 and the second three-dimensional model 522 are volumetric models representing the same target object. However, the times at which the shape of the target object is measured (the first time T1 and the second time T2) are different between the first three-dimensional model 521 and the second three-dimensional model 522. Therefore, in a case where a part or the whole of the target object changes over time, a form of the first three-dimensional model 521 and a form of the second three-dimensional model 522, which represent the target object, may differ. The form of the target object is, for example, a shape, a pattern, or a color of a part or the whole of the target object, or a combination thereof.

In the examples shown in FIGS. 3 and 4, in the target object at the second time T2 (the second three-dimensional model 522), the upper half of the target object disappears compared to the target object at the first time T1 (the first three-dimensional model 521). However, for the part of the target object that does not change between the first time T1 and the second time T2 (e.g., the bottom), the position of the corresponding part of the first three-dimensional model 521 (e.g., the bottom 521a) and the position of the corresponding part of the second three-dimensional model 522 (e.g., the bottom 522a) are the same in the three-dimensional coordinate system CS.

Incidentally, as shown in FIG. 4B, the model generation unit 11 sets a second rectangular parallelepiped 72 for the second three-dimensional model 522 in the second virtual space VS2. The second rectangular parallelepiped 72 is a defining rectangular parallelepiped similar to the first rectangular parallelepiped 71. As shown in FIGS. 4A and 4B, centers of the defining rectangular parallelepipeds (a center 74 of the first rectangular parallelepiped 71 and a center 76 of the second rectangular parallelepiped 72) are located inside the three-dimensional models (the first three-dimensional model 521 and the second three-dimensional model 522).

Next, the difference calculation unit 14 is described with reference to FIGS. 2 and 5. FIG. 5A is a diagram showing an example of the first two-dimensional image 110. FIG. 5B is a diagram showing an example of the second two-dimensional image 120.

As shown in FIG. 5A, the first two-dimensional image 110 includes an image 111 and an image 112. As shown in FIG. 5B, the second two-dimensional image 120 includes an image 121 and an image 122.

The images 111 and 121 are images of the same object. The image 112 is present in the first two-dimensional image 110 but is not present in the second two-dimensional image 120. The image 122 is not present in the first two-dimensional image 110 but is present in the second two-dimensional image 120.

The difference calculation unit 14 calculates a difference between the first two-dimensional image 110 and the second two-dimensional image 120. Then, the difference calculation unit 14 outputs difference data 130 representing the difference. The storage unit 50 stores the difference data 130. FIG. 5C is a diagram showing a concept of the difference data 130. As shown in FIG. 5C, the difference data 130 includes difference data 1120 (dense dots) corresponding to the image 112 in FIG. 5A, difference data 1220 (sparse dots) corresponding to the image 122 in FIG. 5B, and difference data 1000. The difference data 1000 is data representing that there is no difference.

Specifically, the difference calculation unit 14 calculates a difference for each pixel in the first two-dimensional image 110 and the second two-dimensional image 120. That is, the difference calculation unit 14 calculates a difference in pixel values between corresponding pixels in the first two-dimensional image 110 and the second two-dimensional image 120. More specifically, a single pixel is constituted by N pixel elements. N is an integer equal to or greater than 2. Therefore, a pixel value of the single pixel includes N pixel element values. Accordingly, the difference calculation unit 14 calculates a difference of pixel element values for each pixel element value between corresponding pixels. For this reason, the difference data 130 is a set of differences (difference values) of pixel element values of each pixel.

For example, N is 3. In this case, N pixel elements that constitute a single pixel are, for example, an R (red) element, a G (green) element, and a B (blue) element. In this case, three pixel element values included in a pixel value of a single pixel are an R value, a G value, and a B value. The R value, G value, and B value each indicate a luminance value. Accordingly, the difference calculation unit 14 calculates a difference in the R values, a difference in the G values, and a difference in the B values between corresponding pixels in the first two-dimensional image 110 and the second two-dimensional image 120.

For example, the difference calculation unit 14 may calculate a difference by subtracting the second two-dimensional image 120 from the first two-dimensional image 110, or may calculate a difference by subtracting the first two-dimensional image 110 from the second two-dimensional image 120.

Specifically, for example, the difference calculation unit 14 may calculate differences by subtracting pixel element values of the second two-dimensional image 120 from the corresponding pixel element values of the first two-dimensional image 110, or may calculate differences by subtracting pixel element values of the first two-dimensional image 110 from the corresponding pixel element values of the second two-dimensional image 120.

Also, the difference calculation unit 14 may perform the following processing on the difference data 130 to generate new difference data (hereinafter referred to as "difference data 130A").

That is, in each pixel, in a case where the absolute value of the difference of at least one pixel element value is equal to or greater than a threshold value TH and the difference has a positive value, the difference calculation unit 14 sets a first predetermined value as a new difference corresponding to the pixel. Also, in each pixel, in a case where the absolute value of the difference of at least one pixel element value is equal to or greater than the threshold value TH and the difference has a negative value, the difference calculation unit 14 sets a second predetermined value as a new difference corresponding to the pixel. Further, in each pixel, in a case where the absolute values of the differences of N pixel element values are less than the threshold value TH, the difference calculation unit 14 sets a third predetermined value as a new difference corresponding to the pixel.

The first predetermined value, the second predetermined value, and the third predetermined value are different from one another. As a result of the above, the difference data 130A is a set of newly obtained differences (difference values) for each pixel. The storage unit 50 stores the difference data 130A. For example, as shown in FIG. 5C, the difference data 130A is constituted by difference data 1120A having the first predetermined value, difference data 1220A having the second predetermined value, and difference data 1000A having the third predetermined value.

As described above with reference to FIG. 5, according to the embodiment, a difference in two-dimensional images (the first two-dimensional image 110 and the second two-dimensional image 120) is calculated instead of directly analyzing three-dimensional models (the first three-dimensional model 521 and the second three-dimensional model 522) and calculating a difference. Therefore, processing load on the server 1 when calculating the difference can be reduced.

As a reference example, in a case where a difference is calculated by analyzing the entire region of three-dimensional data (point cloud data) constituting a three-dimensional model using an octree algorithm, processing load on a computer is large. In contrast, in the embodiment, by calculating the difference of the two-dimensional images (the first two-dimensional image 110 and the second two-dimensional image 120), it results in indirectly calculating a difference of the three-dimensional models (the first three-dimensional model 521 and the second three-dimensional model 522) while reducing processing load of the server 1.

In particular, in the embodiment, as shown in FIG. 3, preprocessing for calculating the difference is the process of generating the first two-dimensional image 110 representing the first three-dimensional model 521 as a two-dimensional plane viewed from the first viewpoint 61, and the process of generating the second two-dimensional image 120 representing the second three-dimensional model 522 as a two-dimensional plane viewed from the second viewpoint 81 which is the same as the first viewpoint 61. In this way, by performing the simple preprocessing, the first two-dimensional image 110 and the second two-dimensional image 120 which are difference targets can be easily calculated.

Also, in the embodiment, the image adjustment unit 13 in FIG. 2 may perform adjustment processing on at least one image of the first two-dimensional image 110 and the second two-dimensional image 120. In this case, the difference calculation unit 14 calculates the difference between the first two-dimensional image 110 and the second two-dimensional image 120 after performing the adjustment processing.

The adjustment processing includes at least one processing of a first adjustment processing and a second adjustment processing.

The first adjustment processing is processing that adjusts color tone of at least one image of the first two-dimensional image 110 and the second two-dimensional image 120. The color tone is luminance and/or contrast of an image. The image adjustment unit 13, for example, brings color tone of one image of the first two-dimensional image 110 and the second two-dimensional image 120 closer to color tone of the other image, or matches color tone of one image to color tone of the other image.

For example, in a case where the first time T1 is noon and the second time T2 is evening, differences may be large in all pixels. In this case, even if the target object does not change between the first time T1 and the second time T2, the differences are large, and therefore, a determination may be made that the target object has changed. Accordingly, by calculating the differences after bringing the color tones of the first two-dimensional image 110 and the second two-dimensional image 120 closer to each other or matching the color tones, the change in the target object can be detected with high accuracy.

The second adjustment processing is processing that excludes at least one pixel element of N pixel elements constituting each pixel in the first two-dimensional image 110 and the second two-dimensional image 120 from a difference target. For example, the image adjustment unit 13 excludes a pixel element that depends on surrounding environment of the target object among N pixel elements constituting each pixel from the difference target by the difference calculation unit 14.

For example, in the evening, the B value may be larger among the R value, G value, and B value compared to noon. In this case, even if the target object does not change between the first time T1 and the second time T2, the difference in the B values is large, and therefore, a determination may be made that the target object has changed. Accordingly, for example, in a case where the first time T1 is noon and the second time T2 is evening, the change in the target object can be detected with high accuracy by calculating the difference after excluding the B element from the difference target among the R element, G element, and B element of each pixel.

As described above, by providing the image adjustment unit 13, even if a surrounding environment of the target object at the first time T1 when the target object corresponding to the first three-dimensional model 521 is measured and a surrounding environment of the target object at the second time T2 when the target object corresponding to the second three-dimensional model 522 is measured are different, by calculating the difference between the first two-dimensional image 110 and the second two-dimensional image 120, a variation between the target object at the first time T1 and the target object at the second time T2 can be detected with high accuracy.

Incidentally, the first adjustment processing and the second adjustment processing are only examples, and any adjustment processing may be performed on the first two-dimensional image 110 and the second two-dimensional image 120.

Also, in the embodiment, the image enhancement unit 15 in FIG. 2 may emphasize, based on the difference between the first two-dimensional image 110 and the second two-dimensional image 120, a region where the first two-dimensional image 110 and the second two-dimensional image 120 differ, in a two-dimensional image or a three-dimensional model. In this case, when a user visually recognizes the two-dimensional image or the three-dimensional model, the differing region can be easily confirmed. For example, the image enhancement unit 15, based on the difference between the first two-dimensional image 110 and the second two-dimensional image 120, applies a specific color to the region where the first two-dimensional image 110 and the second two-dimensional image 120 differ, in the two-dimensional image or the three-dimensional model.

FIG. 6A is a diagram showing an example of a two-dimensional image 140 including regions 1221 and 1121 where the first two-dimensional image 110 and the second two-dimensional image 120 differ. As shown in FIG. 6A, the image enhancement unit 15, based on the difference data 130 or the difference data 130A (FIG. 5C), emphasizes regions 1121 and 1221 in the two-dimensional image 140 compared to a region 141 where the first two-dimensional image 110 and the second two-dimensional image 120 do not differ. The region 1121 is identified based on the difference data 1120 or the difference data 1120A (FIG. 5C). The region 1221 is identified based on the difference data 1220 or the difference data 1220A.

For example, the region 1121 is emphasized by being applied with a first specific color 1122 (hatching by diagonal lines extending to the upper left). For example, to the region 1221, a second specific color 1222 (hatching by diagonal lines extending to the upper right) is applied for emphasis.

The first specific color 1122 is different from the second specific color 1222. Therefore, a user can easily distinguish between a region 1121 that is present in the first two-dimensional image 110 but is not present in the second two-dimensional image 120, and a region 1221 that is not present in the first two-dimensional image 110 but is present in the second two-dimensional image 120.

As an example, the image enhancement unit 15 generates the two-dimensional image 140 in FIG. 6A based on the difference data 130 or the difference data 130A in FIG. 5C, with the first two-dimensional image 110 or the second two-dimensional image 120 as a base image. In this case, for example, in the first two-dimensional image 110 (FIG. 5A) or the second two-dimensional image 120 (FIG. 5B), the image enhancement unit 15 applies the first specific color 1122 to a region identified by the difference data 1120, 1120A, and applies the second specific color 1222 to a region identified by the difference data 1220, 1220A. As a result, in the two-dimensional image 140, the regions 1121 and 1221 where the first two-dimensional image 110 and the second two-dimensional image 120 differ are emphasized.

The storage unit 50 in FIG. 2 stores the two-dimensional image 140. Then, the display control unit 16 causes the terminal 2 to display the two-dimensional image 140 via the communication unit 40. As a result, the user of the terminal 2 can easily recognize the regions 1121 and 1221 where the first two-dimensional image 110 and the second two-dimensional image 120 differ.

FIG. 6B is a diagram showing an example of a three-dimensional model 140A including regions 1221A and 1121A where the first two-dimensional image 110 and the second two-dimensional image 120 differ. As shown in FIG. 6B, the three-dimensional model 140A is placed in the virtual space VS where the three-dimensional coordinate system CS is set. The image enhancement unit 15, based on the difference data 130 or the difference data 130A (FIG. 5C), emphasizes regions 1121A and 1221A in the three-dimensional model 140A compared to a region 141A where the first two-dimensional image 110 and the second two-dimensional image 120 do not differ. The region 1121A is identified based on the difference data 1120 or the difference data 1120A (FIG. 5C), and is emphasized by being applied with the first specific color 1122. The region 1221A is identified based on the difference data 1220 or the difference data 1220A, and is emphasized by being applied with the second specific color 1222.

As an example, the image enhancement unit 15 generates the three-dimensional model 140A in FIG. 6B based on the difference data 130 or the difference data 130A in FIG. 5C, with the first three-dimensional model 521 corresponding to the first two-dimensional image 110 or the second three-dimensional model 522 corresponding to the second two-dimensional image 120 as a base model. In this case, surfaces are assigned in advance to the first three-dimensional model 521 and the second three-dimensional model 522, and material information is added to the surfaces.

Therefore, for example, the image enhancement unit 15, in the first three-dimensional model 521 or the second three-dimensional model 522, applies the first specific color 1122 instead of the material information to a region identified by the difference data 1120, 1120A. Furthermore, the image enhancement unit 15, in the first three-dimensional model 521 or the second three-dimensional model 522, applies the second specific color 1222 instead of the material information to a region identified by the difference data 1220, 1220A. As a result, in the three-dimensional model 140A, the regions 1121A and 1221A where the first two-dimensional image 110 and the second two-dimensional image 120 differ are emphasized.

The storage unit 50 in FIG. 2 stores the three-dimensional model 140A. Then, the display control unit 16 causes the terminal 2 to display the three-dimensional model 140A via the communication unit 40. As a result, the user of the terminal 2 can easily recognize, on the three-dimensional model 140A, the regions 1121A and 1221A where the first two-dimensional image 110 and the second two-dimensional image 120 differ.

Now, the image generation unit 12 is described with reference to FIGS. 2 and 3. The image generation unit 12 may set a plurality of different first viewpoints 61 in the first virtual space VS1 (FIG. 3A). Then, the image generation unit 12 may generate a first two-dimensional image 110 for each of the plurality of different first viewpoints 61. Furthermore, the image generation unit 12 may set a plurality of different second viewpoints 81 in the second virtual space VS2 (FIG. 3B). Then, the image generation unit 12 may generate a second two-dimensional image 120 for each of the plurality of different second viewpoints 81. Furthermore, the difference calculation unit 14 may calculate a plurality of differences corresponding to the plurality of first viewpoints 61 and the plurality of second viewpoints 81. Hereinafter, the first viewpoint 61 and the second viewpoint 81 which is the same as the first viewpoint 61 are referred to as a "viewpoint pair". In this case, the first two-dimensional image 110 and the second two-dimensional image 120 are generated for each different viewpoint pair. Therefore, for each different viewpoint pair, the difference between the first two-dimensional image 110 and the second two-dimensional image 120 is generated. That is, for the plurality of viewpoint pairs, respectively, the plurality of differences are generated. Therefore, variations between the target object at the first time T1 and the target object at the second time T2 can be detected with high accuracy over the entire region of the target object.

For example, in the first virtual space VS1 shown in FIG. 3A, the image generation unit 12 sets the plurality of first viewpoints 61 to a plurality of points selected from the vertices a1 to a8, the midpoints b1 to b12, and the centers c1 to c6. Then, in the second virtual space VS2 shown in FIG. 3B, the image generation unit 12 sets the plurality of second viewpoints 81 which are respectively the same as the plurality of first viewpoints 61.

Next, an image analysis method according to this embodiment is described with reference to FIGS. 2 and 7. FIG. 7 is a flowchart showing the image analysis method. The image analysis method is performed by the server 1. As shown in FIG. 7, the image analysis method includes Steps S1 to S12. A computer program stored in the storage unit 50 causes the arithmetic unit 10 to execute Steps S1 to S12. That is, a computer program product realizes steps S1 to S12 when the computer program is executed by the arithmetic unit 10. The arithmetic unit 10 corresponds to an example of a "computer" in the present disclosure.

As shown in FIGS. 2 and 7, first, in Step S1, the model generation unit 11 acquires the first three-dimensional model 521. Specifically, the model generation unit 11 generates the first three-dimensional model 521 representing the target object at the first time T1 based on a plurality of two-dimensional images generated by imaging the target object from a plurality of different imaging positions at the first time T1. Alternatively, the model generation unit 11 sets the three-dimensional data 513 based on the measurement result of the target object at the first time T1 as the first three-dimensional model 521. Then, the model generation unit 11 sets the first rectangular parallelepiped 71 surrounding the first three-dimensional model 521 for the first three-dimensional model 521.

Next, in Step S2, the image generation unit 12 generates the first two-dimensional image 110 representing the first three-dimensional model 521 as a two-dimensional plane viewed from the first viewpoint 61 in the first virtual space VS1. The first viewpoint 61 is set on the first rectangular parallelepiped 71.

Next, in Step S3, the model generation unit 11 acquires the second three-dimensional model 522. Specifically, the model generation unit 11 generates the second three-dimensional model 522 representing the target object at the second time T2 based on a plurality of two-dimensional images generated by imaging the target object from a plurality of different imaging positions at the second time T2. Alternatively, the model generation unit 11 sets the three-dimensional data 513 based on the measurement result of the target object at the second time T2 as the second three-dimensional model 522. Then, the model generation unit 11 sets the second rectangular parallelepiped 72 surrounding the second three-dimensional model 522 for the second three-dimensional model 522. In the present disclosure, the setting of the second rectangular parallelepiped 72 is not essential.

Next, in Step S4, the image generation unit 12 generates the second two-dimensional image 120 representing the second three-dimensional model 522 as a two-dimensional plane viewed from the second viewpoint 81 in the second virtual space VS2. In the three-dimensional coordinate system CS set in the first virtual space VS1 and the second virtual space VS2, the position and viewing direction 82 of the second viewpoint 81 are the same as the position and viewing direction 82 of the first viewpoint 61, respectively.

Next, in Step S5, the image adjustment unit 13 performs the adjustment processing on at least one image of the first two-dimensional image 110 and the second two-dimensional image 120.

Next, in Step S6, the difference calculation unit 14 calculates a difference between the first two-dimensional image 110 and the second two-dimensional image 120 after performing the adjustment processing, and generates difference data 130.

Next, in Step S7, the image enhancement unit 15, based on the difference indicated by the difference data 130, emphasizes a region where the first two-dimensional image 110 and the second two-dimensional image 120 differ, in the two-dimensional image 140 or the three-dimensional model 140A.

Next, in Step S8, the image generation unit 12 determines whether or not difference data 130 representing a difference is generated for all viewpoint pairs (the first viewpoint 61 and the second viewpoint 81).

When a negative determination is made in Step S8 (NO), the process proceeds to Step S9.

Next, in Step S9, the image generation unit 12 changes the viewpoint pair (the first viewpoint 61 and the second viewpoint 81).

Next, in Step S10, the image generation unit 12 generates the first two-dimensional image 110 representing the first three-dimensional model 521 as a two-dimensional plane viewed from the changed first viewpoint 61.

Next, in Step S11, the image generation unit 12 generates the second two-dimensional image 120 representing the second three-dimensional model 522 as a two-dimensional plane viewed from the changed second viewpoint 81. Then, the process proceeds to Step S5. Steps S5 to S11 are repeated until difference data 130 is calculated for all viewpoint pairs (the first viewpoint 61 and the second viewpoint 81).

On the other hand, when an affirmative determination is made in Step S8 (YES), the process proceeds to Step S12.

Next, in Step S12, the display control unit 16, in response to a request from the user's terminal 2, causes the terminal 2 to display, via the communication unit 40, the two-dimensional image 140 or the three-dimensional model 140A in which a region where the first two-dimensional image 110 and the second two-dimensional image 120 differ is emphasized. Then, the image analysis method ends.

As described above with reference to FIG. 7, according to the image analysis method of the embodiment, the difference in the two-dimensional images (the first two-dimensional image 110 and the second two-dimensional image 120) is calculated instead of directly analyzing the three-dimensional models (the first three-dimensional model 521 and the second three-dimensional model 522) and calculating the difference. Therefore, processing load on the server 1 when calculating the difference can be reduced.

The apparatus or system described in this specification may be realized as a single apparatus or may be realized by a plurality of apparatuses (e.g., cloud servers), some or all of which are connected via a network. For example, some or all of the model generation unit 11, the image generation unit 12, the image adjustment unit 13, the difference calculation unit 14, the image enhancement unit 15, and the display control unit 16 may be realized by the same computer or server. For example, the model generation unit 11, the image generation unit 12, the image adjustment unit 13, the difference calculation unit 14, the image enhancement unit 15, and the display control unit 16 may be realized by separate computers or servers. Also, for example, the model generation unit 11, the image generation unit 12, the image adjustment unit 13, the difference calculation unit 14, the image enhancement unit 15, and the display control unit 16 may be realized by the terminal 2 or the three-dimensional measurement device 7. For example, the video data 511, the still image data set 512, the three-dimensional data 513, the first three-dimensional model 521, the second three-dimensional model 522, the first two-dimensional image 110, the second two-dimensional image 120, the difference data 130, 130A, the two-dimensional image 140, and the three-dimensional model 140A may be stored in separate storage devices or servers.

A series of processes by the apparatus described in this specification may be realized using software, hardware, or a combination of software and hardware. It is possible to create a computer program to realize each function of the arithmetic unit 10 according to the present embodiment and to implement it in a PC or the like. Also, a computer-readable recording medium storing such a computer program can be provided. The recording medium is, for example, a magnetic disk, an optical disk, a magneto-optical disk, a flash memory, or the like. Also, the computer program described above may be distributed via a network, for example, without using a recording medium.

The processes described in this specification using flowchart diagrams do not necessarily have to be executed in the illustrated order. Some processing steps may be executed in parallel. Also, additional processing steps may be adopted, and some processing steps may be omitted.

The effects described in this specification are merely explanatory or illustrative and are not limiting. In other words, the technology according to the present disclosure may achieve other effects that are apparent to those skilled in the art from the description in this specification, either together with or in place of the above effects.

### [Industrial Applicability]

The present disclosure provides an image analysis apparatus, an image analysis method, and a computer program, and has industrial applicability.

### [Reference Signs List]

1 Server (Image analysis apparatus), 11 Model generation unit, 12 Image generation unit, 13 Image adjustment unit, 14 Difference calculation unit, 15 Image enhancement unit, 16 Display control unit

## Claims

1. An image analysis apparatus (1) comprising:
an image generation unit (12) that generates a first two-dimensional image (110) and a second two-dimensional image (120); and
a difference calculation unit (14) that calculates a difference between the first two-dimensional image (110) and the second two-dimensional image (120); wherein
the image generation unit (12)
generates the first two-dimensional image (110) representing a first three-dimensional model (521) as a two-dimensional plane viewed from a first viewpoint (61) in a first virtual space, the first three-dimensional model (521) being generated based on a measurement result of a shape of a target object at a first time in a real space, and
generates the second two-dimensional image (120) representing a second three-dimensional model (522) as a two-dimensional plane viewed from a second viewpoint (81) in a second virtual space, the second three-dimensional model (522) being generated based on a measurement result of a shape of the target object at a second time in the real space,
a same coordinate system is set in the first virtual space and the second virtual space, and
in the coordinate system, a position and a viewing direction (82) of the second viewpoint (81) are a same as a position and a viewing direction (62) of the first viewpoint (61), respectively;
**characterized in that**:
the first viewpoint (61) is set on a rectangular parallelepiped (71) surrounding the first three-dimensional model (521), and
the rectangular parallelepiped (71) is a rectangular parallelepiped that defines a display range when displaying the first three-dimensional model (521) in a viewer.

2. The image analysis apparatus (1) according to claim 1, wherein
the first viewpoint (61) is set at a vertex of the rectangular parallelepiped (71), a midpoint of an edge of the rectangular parallelepiped (71), or a center (74) of a face of the rectangular parallelepiped (71).

3. The image analysis apparatus (1) according to claim 1, wherein
the first viewpoint (61) is set at a vertex of the rectangular parallelepiped (71) and faces in a direction of a diagonal line (73) extending from the vertex.

4. The image analysis apparatus (1) according to claim 1, wherein
the image generation unit (12)
sets a plurality of the first viewpoints (61) being different in the first virtual space,
generates the first two-dimensional image (110) for each of the plurality of first viewpoints (61) being different,
sets a plurality of the second viewpoints (81) being different in the second virtual space, and
generates the second two-dimensional image (120) for each of the plurality of second viewpoints (81) being different, and
the difference calculation unit (14) calculates a plurality of the differences corresponding to the plurality of first viewpoints (61) and the plurality of second viewpoints (81).

5. The image analysis apparatus (1) according to claim 1, further comprising an image adjustment unit (13) that performs adjustment processing on at least one image of the first two-dimensional image (110) and the second two-dimensional image (120), wherein
the adjustment processing includes at least one processing of a first adjustment processing and a second adjustment processing,
the first adjustment processing is processing that adjusts color tone of the at least one image,
the second adjustment processing is processing that excludes at least one pixel element of a plurality of pixel elements constituting each pixel in the first two-dimensional image (110) and the second two-dimensional image (120) from a difference target, and
the difference calculation unit (14) calculates the difference between the first two-dimensional image (110) and the second two-dimensional image (120) after performing the adjustment processing.

6. The image analysis apparatus (1) according to claim 1, further comprising an image enhancement unit (15) that emphasizes, based on the difference, a region where the first two-dimensional image (110) and the second two-dimensional image differ, in a two-dimensional image or a three-dimensional model (140A).

7. An image analysis method comprising:
generating a first two-dimensional image (110) representing a first three-dimensional model (521) as a two-dimensional plane viewed from a first viewpoint (61) in a first virtual space, the first three-dimensional model (521) being generated based on a measurement result of a shape of a target object at a first time in a real space;
generating a second two-dimensional image (120) representing a second three-dimensional model (522) as a two-dimensional plane viewed from a second viewpoint (81) in a second virtual space, the second three-dimensional model (522) being generated based on a measurement result of a shape of the target object at a second time in the real space; and
calculating a difference between the first two-dimensional image (110) and the second two-dimensional image (120), wherein
a same coordinate system is set in the first virtual space and the second virtual space, and
in the coordinate system, a position and a viewing direction (82) of the second viewpoint (81) are a same as a position and a viewing direction (62) of the first viewpoint (61), respectively;
**characterized in that**:
the first viewpoint (61) is set on a rectangular parallelepiped (71) surrounding the first three-dimensional model (521), and
the rectangular parallelepiped (71) is a rectangular parallelepiped that defines a display range when displaying the first three-dimensional model (521) in a viewer.

8. A computer program causing a computer to perform:
generating a first two-dimensional image (110) representing a first three-dimensional model (521) as a two-dimensional plane viewed from a first viewpoint (61) in a first virtual space, the first three-dimensional model (521) being generated based on a measurement result of a shape of a target object at a first time in a real space;
generating a second two-dimensional image (120) representing a second three-dimensional model (522) as a two-dimensional plane viewed from a second viewpoint (81) in a second virtual space, the second three-dimensional model (522) being generated based on a measurement result of a shape of the target object at a second time in the real space; and
calculating a difference between the first two-dimensional image (110) and the second two-dimensional image (120), wherein
a same three-dimensional coordinate system is set in the first virtual space and the second virtual space, and
in the three-dimensional coordinate system, a position and a viewing direction (82) of the second viewpoint (81) are a same as a position and a viewing direction (62) of the first viewpoint (61), respectively;
**characterized in that**:
the first viewpoint (61) is set on a rectangular parallelepiped (71) surrounding the first three-dimensional model (521), and
the rectangular parallelepiped (71) is a rectangular parallelepiped that defines a display range when displaying the first three-dimensional model (521) in a viewer.

## Patentansprüche

1. Bildanalysevorrichtung (1), umfassend:
eine Bilderzeugungseinheit (12), die ein erstes zweidimensionales Bild (110) und ein zweites zweidimensionales Bild (120) erzeugt; und
eine Differenzberechnungseinheit (14), die eine Differenz zwischen dem ersten zweidimensionalen Bild (110) und dem zweiten zweidimensionalen Bild (120) berechnet; wobei
die Bilderzeugungseinheit (12)
das erste zweidimensionale Bild (110) erzeugt, das ein erstes dreidimensionales Modell (521) als eine zweidimensionale Ebene darstellt, die von einem ersten Blickpunkt (61) in einem ersten virtuellen Raum aus betrachtet wird, wobei das erste dreidimensionale Modell (521) auf Grundlage eines Messergebnisses einer Form eines Zielobjekts zu einem ersten Zeitpunkt in einem realen Raum erzeugt wird, und
das zweite zweidimensionale Bild (120) erzeugt, das ein zweites dreidimensionales Modell (522) als eine zweidimensionale Ebene darstellt, die von einem zweiten Blickpunkt (81) in einem zweiten virtuellen Raum aus betrachtet wird, wobei das zweite dreidimensionale Modell (522) auf Grundlage eines Messergebnisses einer Form des Zielobjekts zu einem zweiten Zeitpunkt in dem realen Raum erzeugt wird,
dasselbe Koordinatensystem in dem ersten virtuellen Raum und dem zweiten virtuellen Raum festgelegt ist, und
in dem Koordinatensystem eine Position und eine Blickrichtung (82) des zweiten Blickpunkts (81) jeweils dieselben sind wie eine Position und eine Blickrichtung (62) des ersten Blickpunkts (61);
**dadurch gekennzeichnet, dass**:
der erste Blickpunkt (61) auf einem Quader (71) festgelegt ist, der das erste dreidimensionale Modell (521) umgibt, und
der Quader (71) ein Quader ist, der einen Anzeigebereich definiert, wenn das erste dreidimensionale Modell (521) in einem Viewer angezeigt wird.

2. Bildanalysevorrichtung (1) nach Anspruch 1, wobei
der erste Blickpunkt (61) an einem Eckpunkt des Quaders (71), einem Mittelpunkt einer Kante des Quaders (71) oder einem Mittelpunkt (74) einer Fläche des Quaders (71) festgelegt ist.

3. Bildanalysevorrichtung (1) nach Anspruch 1, wobei
der erste Blickpunkt (61) an einem Eckpunkt des Quaders (71) festgelegt ist und in eine Richtung einer Diagonale (73) weist, die sich von dem Eckpunkt aus erstreckt.

4. Bildanalysevorrichtung (1) nach Anspruch 1, wobei
die Bilderzeugungseinheit (12)
eine Mehrzahl der ersten Blickpunkte (61), die verschieden sind, in dem ersten virtuellen Raum festlegt,
das erste zweidimensionale Bild (110) für jeden der Mehrzahl der ersten Blickpunkte (61), die verschieden sind, erzeugt,
eine Mehrzahl der zweiten Blickpunkte (81), die verschieden sind, in dem zweiten virtuellen Raum festlegt, und
das zweite zweidimensionale Bild (120) für jeden der Mehrzahl der zweiten Blickpunkte (81), die verschieden sind, erzeugt, und
die Differenzberechnungseinheit (14) eine Mehrzahl der Differenzen berechnet, die der Mehrzahl der ersten Blickpunkte (61) und der Mehrzahl der zweiten Blickpunkte (81) entsprechen.

5. Bildanalysevorrichtung (1) nach Anspruch 1, ferner umfassend eine Bildanpassungseinheit (13), die eine Anpassungsverarbeitung an mindestens einem Bild von dem ersten zweidimensionalen Bild (110) und dem zweiten zweidimensionalen Bild (120) durchführt, wobei
die Anpassungsverarbeitung mindestens eine Verarbeitung von einer ersten Anpassungsverarbeitung und einer zweiten Anpassungsverarbeitung umfasst,
die erste Anpassungsverarbeitung eine Verarbeitung ist, die einen Farbton des mindestens einen Bildes anpasst,
die zweite Anpassungsverarbeitung eine Verarbeitung ist, die mindestens ein Pixelelement einer Mehrzahl von Pixelelementen, die jedes Pixel in dem ersten zweidimensionalen Bild (110) und dem zweiten zweidimensionalen Bild (120) bilden, von einem Differenzziel ausschließt, und
die Differenzberechnungseinheit (14) die Differenz zwischen dem ersten zweidimensionalen Bild (110) und dem zweiten zweidimensionalen Bild (120) nach Durchführung der Anpassungsverarbeitung berechnet.

6. Bildanalysevorrichtung (1) nach Anspruch 1, ferner umfassend eine Bildhervorhebungseinheit (15), die auf Grundlage der Differenz einen Bereich, in dem sich das erste zweidimensionale Bild (110) und das zweite zweidimensionale Bild unterscheiden, in einem zweidimensionalen Bild oder einem dreidimensionalen Modell (140A) hervorhebt.

7. Bildanalyseverfahren, umfassend:
Erzeugen eines ersten zweidimensionalen Bildes (110), das ein erstes dreidimensionales Modell (521) als eine zweidimensionale Ebene darstellt, die von einem ersten Blickpunkt (61) in einem ersten virtuellen Raum aus betrachtet wird, wobei das erste dreidimensionale Modell (521) auf Grundlage eines Messergebnisses einer Form eines Zielobjekts zu einem ersten Zeitpunkt in einem realen Raum erzeugt wird;
Erzeugen eines zweiten zweidimensionalen Bildes (120), das ein zweites dreidimensionales Modell (522) als eine zweidimensionale Ebene darstellt, die von einem zweiten Blickpunkt (81) in einem zweiten virtuellen Raum aus betrachtet wird, wobei das zweite dreidimensionale Modell (522) auf Grundlage eines Messergebnisses einer Form des Zielobjekts zu einem zweiten Zeitpunkt in dem realen Raum erzeugt wird; und
Berechnen einer Differenz zwischen dem ersten zweidimensionalen Bild (110) und dem zweiten zweidimensionalen Bild (120), wobei
dasselbe Koordinatensystem in dem ersten virtuellen Raum und dem zweiten virtuellen Raum festgelegt ist, und
in dem Koordinatensystem eine Position und eine Blickrichtung (82) des zweiten Blickpunkts (81) jeweils dieselben sind wie eine Position und eine Blickrichtung (62) des ersten Blickpunkts (61);
**dadurch gekennzeichnet, dass**:
der erste Blickpunkt (61) auf einem Quader (71) festgelegt ist, der das erste dreidimensionale Modell (521) umgibt, und
der Quader (71) ein Quader ist, der einen Anzeigebereich definiert, wenn das erste dreidimensionale Modell (521) in einem Viewer angezeigt wird.

8. Computerprogramm, das einen Computer veranlasst, Folgendes durchzuführen:
Erzeugen eines ersten zweidimensionalen Bildes (110), das ein erstes dreidimensionales Modell (521) als eine zweidimensionale Ebene darstellt, die von einem ersten Blickpunkt (61) in einem ersten virtuellen Raum aus betrachtet wird, wobei das erste dreidimensionale Modell (521) auf Grundlage eines Messergebnisses einer Form eines Zielobjekts zu einem ersten Zeitpunkt in einem realen Raum erzeugt wird;
Erzeugen eines zweiten zweidimensionalen Bildes (120), das ein zweites dreidimensionales Modell (522) als eine zweidimensionale Ebene darstellt, die von einem zweiten Blickpunkt (81) in einem zweiten virtuellen Raum aus betrachtet wird, wobei das zweite dreidimensionale Modell (522) auf Grundlage eines Messergebnisses einer Form des Zielobjekts zu einem zweiten Zeitpunkt in dem realen Raum erzeugt wird; und
Berechnen einer Differenz zwischen dem ersten zweidimensionalen Bild (110) und dem zweiten zweidimensionalen Bild (120), wobei
dasselbe dreidimensionale Koordinatensystem in dem ersten virtuellen Raum und dem zweiten virtuellen Raum festgelegt ist, und
in dem dreidimensionalen Koordinatensystem eine Position und eine Blickrichtung (82) des zweiten Blickpunkts (81) jeweils dieselben sind wie eine Position und eine Blickrichtung (62) des ersten Blickpunkts (61);
**dadurch gekennzeichnet, dass**:
der erste Blickpunkt (61) auf einem Quader (71) festgelegt ist, der das erste dreidimensionale Modell (521) umgibt, und
der Quader (71) ein Quader ist, der einen Anzeigebereich definiert, wenn das erste dreidimensionale Modell (521) in einem Viewer angezeigt wird.

## Revendications

1. Appareil d'analyse d'image (1) comprenant :
une unité de génération d'image (12) qui génère une première image bidimensionnelle (110) et une deuxième image bidimensionnelle (120) ; et
une unité de calcul de différence (14) qui calcule une différence entre la première image bidimensionnelle (110) et la deuxième image bidimensionnelle (120) ; dans lequel
l'unité de génération d'image (12)
génère la première image bidimensionnelle (110) représentant un premier modèle tridimensionnel (521) en tant que plan bidimensionnel vu depuis un premier point de vue (61) dans un premier espace virtuel, le premier modèle tridimensionnel (521) étant généré sur la base d'un résultat de mesure d'une forme d'un objet cible à un premier instant dans un espace réel, et
génère la deuxième image bidimensionnelle (120) représentant un deuxième modèle tridimensionnel (522) en tant que plan bidimensionnel vu depuis un deuxième point de vue (81) dans un deuxième espace virtuel, le deuxième modèle tridimensionnel (522) étant généré sur la base d'un résultat de mesure d'une forme de l'objet cible à un deuxième instant dans l'espace réel,
un même système de coordonnées est défini dans le premier espace virtuel et le deuxième espace virtuel, et
dans le système de coordonnées, une position et une direction de visée (82) du deuxième point de vue (81) sont respectivement les mêmes qu'une position et une direction de visée (62) du premier point de vue (61) ;
**caractérisé en ce que** :
le premier point de vue (61) est défini sur un parallélépipède rectangle (71) entourant le premier modèle tridimensionnel (521), et
le parallélépipède rectangle (71) est un parallélépipède rectangle qui définit une plage d'affichage lors de l'affichage du premier modèle tridimensionnel (521) dans une visionneuse.

2. Appareil d'analyse d'image (1) selon la revendication 1, dans lequel
le premier point de vue (61) est défini à un sommet du parallélépipède rectangle (71), à un milieu d'une arête du parallélépipède rectangle (71), ou à un centre (74) d'une face du parallélépipède rectangle (71).

3. Appareil d'analyse d'image (1) selon la revendication 1, dans lequel
le premier point de vue (61) est défini à un sommet du parallélépipède rectangle (71) et est orienté dans une direction d'une ligne diagonale (73) s'étendant depuis le sommet.

4. Appareil d'analyse d'image (1) selon la revendication 1, dans lequel
l'unité de génération d'image (12)
définit une pluralité des premiers points de vue (61) différents dans le premier espace virtuel,
génère la première image bidimensionnelle (110) pour chacun de la pluralité de premiers points de vue (61) différents,
définit une pluralité des deuxièmes points de vue (81) différents dans le deuxième espace virtuel, et
génère la deuxième image bidimensionnelle (120) pour chacun de la pluralité de deuxièmes points de vue (81) différents, et
l'unité de calcul de différence (14) calcule une pluralité des différences correspondant à la pluralité de premiers points de vue (61) et à la pluralité de deuxièmes points de vue (81).

5. Appareil d'analyse d'image (1) selon la revendication 1, comprenant en outre une unité d'ajustement d'image (13) qui effectue un traitement d'ajustement sur au moins une image parmi la première image bidimensionnelle (110) et la deuxième image bidimensionnelle (120), dans lequel
le traitement d'ajustement comprend au moins un traitement parmi un premier traitement d'ajustement et un deuxième traitement d'ajustement,
le premier traitement d'ajustement est un traitement qui ajuste une tonalité de couleur de l'au moins une image,
le deuxième traitement d'ajustement est un traitement qui exclut d'une cible de différence au moins un élément de pixel d'une pluralité d'éléments de pixel constituant chaque pixel dans la première image bidimensionnelle (110) et la deuxième image bidimensionnelle (120), et
l'unité de calcul de différence (14) calcule la différence entre la première image bidimensionnelle (110) et la deuxième image bidimensionnelle (120) après avoir effectué le traitement d'ajustement.

6. Appareil d'analyse d'image (1) selon la revendication 1, comprenant en outre une unité d'accentuation d'image (15) qui accentue, sur la base de la différence, une région où la première image bidimensionnelle (110) et la deuxième image bidimensionnelle diffèrent, dans une image bidimensionnelle ou un modèle tridimensionnel (140A).

7. Procédé d'analyse d'image comprenant :
la génération d'une première image bidimensionnelle (110) représentant un premier modèle tridimensionnel (521) en tant que plan bidimensionnel vu depuis un premier point de vue (61) dans un premier espace virtuel, le premier modèle tridimensionnel (521) étant généré sur la base d'un résultat de mesure d'une forme d'un objet cible à un premier instant dans un espace réel ;
la génération d'une deuxième image bidimensionnelle (120) représentant un deuxième modèle tridimensionnel (522) en tant que plan bidimensionnel vu depuis un deuxième point de vue (81) dans un deuxième espace virtuel, le deuxième modèle tridimensionnel (522) étant généré sur la base d'un résultat de mesure d'une forme de l'objet cible à un deuxième instant dans l'espace réel ; et
le calcul d'une différence entre la première image bidimensionnelle (110) et la deuxième image bidimensionnelle (120), dans lequel
un même système de coordonnées est défini dans le premier espace virtuel et le deuxième espace virtuel, et
dans le système de coordonnées, une position et une direction de visée (82) du deuxième point de vue (81) sont respectivement les mêmes qu'une position et une direction de visée (62) du premier point de vue (61) ;
**caractérisé en ce que** :
le premier point de vue (61) est défini sur un parallélépipède rectangle (71) entourant le premier modèle tridimensionnel (521), et
le parallélépipède rectangle (71) est un parallélépipède rectangle qui définit une plage d'affichage lors de l'affichage du premier modèle tridimensionnel (521) dans une visionneuse.

8. Programme informatique amenant un ordinateur à effectuer :
la génération d'une première image bidimensionnelle (110) représentant un premier modèle tridimensionnel (521) en tant que plan bidimensionnel vu depuis un premier point de vue (61) dans un premier espace virtuel, le premier modèle tridimensionnel (521) étant généré sur la base d'un résultat de mesure d'une forme d'un objet cible à un premier instant dans un espace réel ;
la génération d'une deuxième image bidimensionnelle (120) représentant un deuxième modèle tridimensionnel (522) en tant que plan bidimensionnel vu depuis un deuxième point de vue (81) dans un deuxième espace virtuel, le deuxième modèle tridimensionnel (522) étant généré sur la base d'un résultat de mesure d'une forme de l'objet cible à un deuxième instant dans l'espace réel ; et
le calcul d'une différence entre la première image bidimensionnelle (110) et la deuxième image bidimensionnelle (120), dans lequel
un même système de coordonnées tridimensionnel est défini dans le premier espace virtuel et le deuxième espace virtuel, et
dans le système de coordonnées tridimensionnel, une position et une direction de visée (82) du deuxième point de vue (81) sont respectivement les mêmes qu'une position et une direction de visée (62) du premier point de vue (61) ;
**caractérisé en ce que** :
le premier point de vue (61) est défini sur un parallélépipède rectangle (71) entourant le premier modèle tridimensionnel (521), et
le parallélépipède rectangle (71) est un parallélépipède rectangle qui définit une plage d'affichage lors de l'affichage du premier modèle tridimensionnel (521) dans une visionneuse.
